# EUROPEAN PATENT APPLICATION

(11) **EP 4 793 574 A1**
(43) Date of publication of application: **19.08.2026**
(21) Application number: 26158507.9
(22) Date of filing: 13.02.2026
(51) Int. Cl.: F25B 41/00, H01M 10/613, F25B 39/02, F25B 41/42

(54) **CONNECTING DEVICE, THERMAL MANAGEMENT CIRCUIT AND VEHICLE**

(30) Priority: 14.02.2025 CN 202510168293
(71) Applicant: Valeo Automotive Air Conditioning Hubei Co., Ltd., Shashi Hubei Province 434007 (CN)
(72) Inventor: SUN, Jianqi, Shashi, 434000 (CN); ZUO, Sheng, Shashi, 434000 (CN); LIU, Zhigang4, Shashi, 434000 (CN); FAN, Changsheng, Shashi, 434000 (CN); PENG, Zijun, Shashi, 434000 (CN); LI, Xiaojie, Shashi, 434000 (CN)
(74) Representative: Valeo Powertrain Systems

(57) **Abstract**

The present disclosure proposes a connecting device that connects an expansion valve and a cooling device, the connecting device comprising: an inlet pipeline, the inlet pipeline being in fluid connection with an expansion valve outlet; a first outlet pipeline, the first outlet pipeline comprising a first outlet end and a first inlet end connected to the inlet pipeline. An injection part is provided in the inlet pipeline, the injection part having a blocking part that extends in a cross section of the inlet pipeline and an injection port that is partitioned by the blocking part.

The present disclosure further proposes a thermal management circuit, comprising an expansion valve, which comprises an expansion valve outlet; a cooling device, which comprises a first cooling flow path; and the connecting device according to an embodiment of the present disclosure. The inlet pipeline of the connecting device is in fluid connection with the expansion valve outlet, and a first outlet end of the first outlet pipeline of the connecting device is connected to the first cooling flow path.

## Description

### Technical Field

The present disclosure relates to a connecting device and a thermal management circuit.

### Background Art

An operating principle of a battery is a voltage difference; at a high temperature, electrons inside become more active, thereby reducing the voltage difference across two sides of the battery. The battery can only operate in a specific temperature range. A heat exchange system must be able to keep a battery pack in a stable temperature range, while keeping a temperature difference inside the battery pack minimal (such as not exceeding 5 degrees Celsius). If the internal temperature difference is large, a (dis)charge rate of each cell is different, thereby reducing the performance of the battery pack. If the battery overheats or the temperature distribution of the battery pack is uneven, potential thermal stability problems may occur, such as capacity fade, thermal runway and fire/explosion.

Therefore, there is a need for a thermal management circuit that has excellent performance and is able to reduce a battery temperature difference.

### Summary of the Invention

An objective of the present disclosure is to at least solve the defects present in the prior art, the present disclosure proposing a connecting device that connects an expansion valve and a cooling device, the connecting device comprising: an inlet pipeline, the inlet pipeline being in fluid connection with an expansion valve outlet; a first outlet pipeline, the first outlet pipeline comprising a first outlet end and a first inlet end connected to the inlet pipeline. An injection part is provided in the inlet pipeline, the injection part having a blocking part that extends in a cross section of the inlet pipeline and an injection port that is partitioned by the blocking part.

For example, according to some embodiments of the present disclosure, the connecting device further comprises a second outlet pipeline, the second outlet pipeline comprising a second outlet end and a second inlet end connected to the inlet pipeline.

For example, according to some embodiments of the present disclosure, the inlet pipeline, the first outlet pipeline and the second outlet pipeline are distributed in a Y-shape.

For example, according to some embodiments of the present disclosure, the connecting device comprises a first component and a second component that are fitted and fixed to each other, the inlet pipeline being arranged in the first component, the first outlet pipeline and the second outlet pipeline being integrally formed in the second component, the second component further comprising an accommodating hole, and one end of the first component being inserted in the accommodating hole, so that the inlet pipeline, the first outlet pipeline and the second outlet pipeline are distributed in a Y-shape.

For example, according to some embodiments of the present disclosure, the injection part further comprises an outer peripheral part that is located at a radial outer side of the blocking part, and the blocking part comprises a central part that is connected to the outer peripheral part.

For example, according to some embodiments of the present disclosure, the blocking part further comprises an arm, the central part being connected to the outer peripheral part of the injection part by means of the arm, and the outer peripheral part, the central part and the arm defining multiple injection ports.

For example, according to some embodiments of the present disclosure, the injection part may comprise two arms, and two arc-shaped injection ports defined by the outer peripheral part, the central part and the two arms.

For example, according to some embodiments of the present disclosure, the injection part is a symmetrical structure, and the two injection ports are respectively aligned with the first outlet pipeline and the second outlet pipeline.

For example, according to some embodiments of the present disclosure, the centre of the central part further comprises an injection port.

For example, according to some embodiments of the present disclosure, the injection part is arranged near an interface of the first outlet pipeline and the second outlet pipeline.

The present disclosure further proposes a thermal management circuit, comprising an expansion valve, which comprises an expansion valve outlet; a cooling device, which comprises a first cooling flow path; and the connecting device according to an embodiment of the present disclosure. The inlet pipeline of the connecting device is in fluid connection with the expansion valve outlet, and a first outlet end of the first outlet pipeline of the connecting device is connected to the first cooling flow path.

For example, according to some embodiments of the present disclosure, the connecting device further comprises a second outlet pipeline, the second outlet pipeline comprising a second outlet end and a second inlet end connected to the inlet pipeline, and a second outlet end of the second outlet pipeline of the connecting device being connected to the second cooling flow path.

For example, according to some embodiments of the present disclosure, the cooling device is a flat plate shape, and the first cooling flow path and the second cooling flow path respectively extend in a winding manner in a cooling plate and/or comprise multiple sub-flow paths.

For example, according to some embodiments of the present disclosure, the expansion valve is configured to convey refrigerant of both a gas phase and a liquid phase out from the expansion valve outlet.

The present disclosure further proposes a vehicle, comprising a battery and the thermal management circuit according to an embodiment of the present disclosure, the cooling device of the thermal management circuit fitting to the battery to cool the battery.

### Brief Description of the Drawings

Fig. 1 shows a three-dimensional view of a thermal management circuit according to an embodiment of the present disclosure;
Fig. 2 shows an enlarged three-dimensional view of some components of the thermal management circuit according to an embodiment of the present disclosure;
Fig. 3 shows a sectional three-dimensional schematic drawing from a first angle of view of some components of a thermal management circuit according to an embodiment of the present disclosure;
Fig. 4 shows a sectional three-dimensional schematic drawing from a second angle of view of some components of a thermal management circuit according to an embodiment of the present disclosure;
Fig. 5 shows a three-dimensional schematic drawing of an injection part according to an embodiment of the present disclosure.

### Reference signs

1 expansion valve,
11 expansion valve inlet,
12 expansion valve outlet,
2 cooling device,
21 first cooling flow path,
22 second cooling flow path,
3 connecting device,
31 first component,
311 inlet pipeline,
312 fixing part,
313 pipeline end part,
314 sealing member,
32 second component,
321 first outlet pipeline,
3211 first inlet end,
3212 first outlet end,
322 second outlet pipeline,
3221 second inlet end,
3222 second outlet end,
323 accommodating hole,
33 injection part,
331 blocking part,
3311 central part,
3312 arm,
332 injection port,
333 outer peripheral part,
41 first return pipe,
42 second return pipe

### Detailed Description of the Invention

To make the objective, technical solutions and advantages of the present disclosure clearer, the technical solutions of embodiments of the present disclosure will be described clearly and completely below with reference to the drawings of specific embodiments of the present disclosure. Unless otherwise specified, the terms used herein have common meanings in the art. In the drawings, identical reference numerals denote identical components.

Note that in the description of the present disclosure, unless otherwise expressly specified and defined, the terms "mount", "interconnect" and "connect" should be understood in a broad sense, and, for example, may be a fixed connection, a detachable connection or an integrated connection; a mechanical connection or an electrical connection; a direct connection, an indirect connection through an intermediate medium or a connection inside two elements. Those of ordinary skill in the art may understand the specific meanings of the abovementioned terms in the present disclosure according to the specific situation.

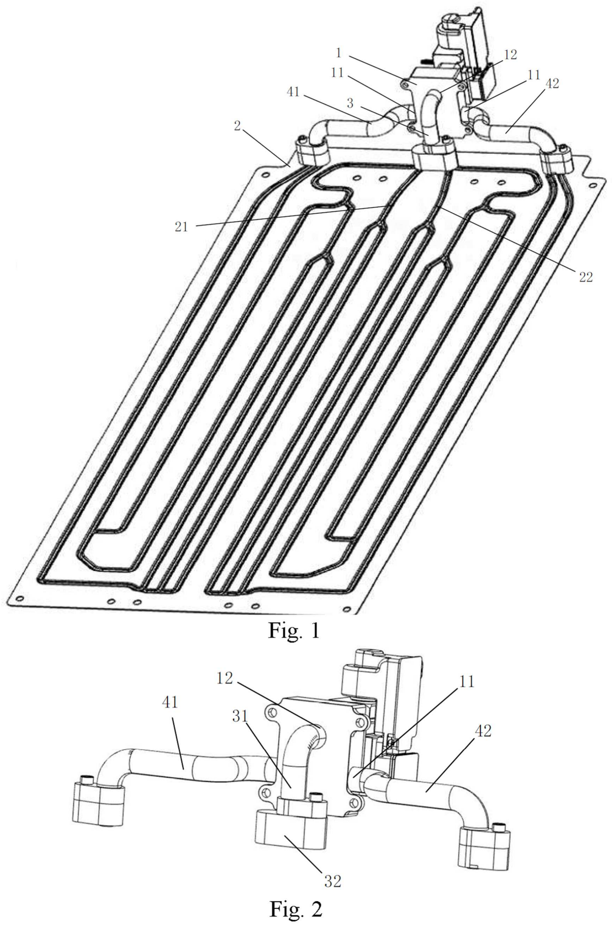

As shown in Fig. 1, a thermal management circuit of the present disclosure may comprise an expansion valve 1, a cooling device 2 and a compressor (not shown); the cooling device 2, for example, may fit to a battery body (not shown), to dissipate heat of the battery body, and the compressor may pressurize refrigerant that has undergone heat exchange, and the expansion valve 1 may reduce pressure by means of throttling to promote a cooling effect of the refrigerant. To connect the expansion valve 1, the cooling device 2 and the compressor, the thermal management circuit of the present disclosure may further comprise a connecting device 3, a first return pipe 41 and a second return pipe 42 to realize complete circuit circulation.

Specifically, as shown in Fig. 1, the cooling device 2 according to the present disclosure may be configured to have a flat plate shape, and a cooling flow path for refrigerant to flow to perform heat exchange with a battery body is provided in the cooling device 2. In particular, the cooling device 2 may comprise one first cooling flow path 21 and one second cooling flow path 22 that are independent of each other, or may comprise more cooling flow paths. The first cooling flow path 21 and the second cooling flow path 22 each comprise an inflow port and an outflow port; specifically, as shown in Fig. 1, the inflow port of the first cooling flow path 21 is in fluid connection with the connecting device 3 (in particular being connected to a first outlet pipeline of the connecting device 3, described below), and the inflow port of the second cooling flow path 22 is in fluid connection with the connecting device 3 (in particular being connected to a second outlet pipeline 322 of the connecting device 3, described below), thus allowing refrigerant that flows out of the expansion valve 1 to flow into the cooling device 2. Outflow ports of the first cooling flow path 21 and the second cooling flow path 22 are respectively in fluid connection with the compressor, such that refrigerant that flows through the first cooling flow path 21 and the second flow path 22 and has already undergone heat exchange flows out and back to the compressor, and then flows into the expansion valve after being pressurized, thus forming two complete circuits.

As shown in Fig. 1, the first cooling flow path 21 and the second cooling flow path 22 may further each comprise multiple sub-flow paths; these sub-flow paths may further extend in a winding manner, such that the first cooling flow path 21 and the second cooling flow path 22 cover as much area as possible in the plane of the plate of the cooling device 2, improving the heat exchange capability of the cooling device 2.

Furthermore, as shown in Fig. 2, the expansion valve 1 may comprise an expansion valve inlet 11 and an expansion valve outlet 12, in particular comprising two expansion valve inlets 11 to correspond to two cooling flow paths. The two expansion valve inlets 11 of the expansion valve are respectively in fluid connection with the outflow ports of the first cooling flow path 21 and the second cooling flow path 22 of the cooling device 2 by means of the first return pipe 41 and the second return pipe 42, to recycle refrigerant. For example, the expansion valve inlet 11 of the expansion valve 1 may be directly connected to the compressor; that is, after flowing into the expansion valve inlet 11, refrigerant does not directly flow out from the expansion valve outlet 12, but rather is conveyed into the compressor for pressurization, after which the pressurized refrigerant is conveyed into the expansion valve 1, to be further conveyed out from the expansion valve outlet 12. Alternatively, outflow ports of the first cooling flow path 21 and the second cooling flow path 22 of the cooling device 2 may be respectively directly connected to the compressor by means of the first return pipe 41 and the second return pipe 42.

The expansion valve 1, for example, may be configured to convey refrigerant of both a gas phase and a liquid phase out from the expansion valve outlet 12, to realize a throttling pressure-reduction effect, beneficial for improving the refrigeration effect.

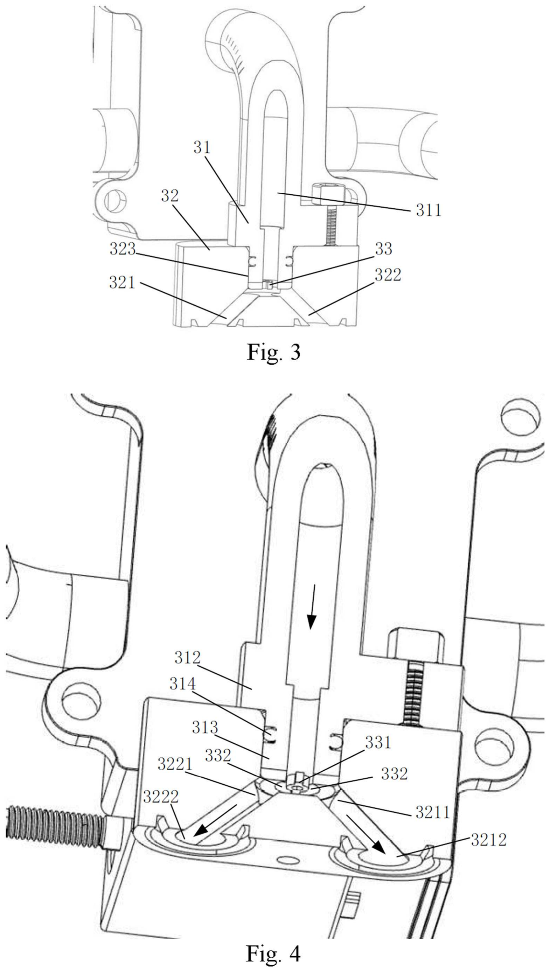

The refrigerant of both the gas phase and the liquid phase that flows out from the expansion valve outlet 12 flows into the connecting device 3, in particular into an inlet pipeline 311 that is in fluid connection with the expansion valve outlet 12. Specifically, as shown in Figs. 2 and 3, the connecting device may comprise the inlet pipeline 311, and the first outlet pipeline 321 and the second outlet pipeline 322 that branch from the inlet pipeline 311; the flow of refrigerant in the connecting device 3 is indicated by the black arrows in Fig. 4. The first outlet pipeline 321 may comprise a first inlet end 3211 and a first outlet end 3212, and the second outlet pipeline 322 may comprise a second inlet end 3221 and a second outlet end 3222. The first inlet end 3211 and the second inlet end 3221 are connected to the inlet pipeline 311, and the first outlet pipeline 321 and the second outlet pipeline 322 are respectively connected to the inflow ports of the first cooling flow path 21 and the second cooling flow path 22 of the cooling device 2 by means of the first outlet end 3212 and the second outlet end 3222. Division into the first outlet pipeline 321 and the second outlet pipeline 322 can better realize stream-splitting, which is advantageous reducing a pressure drop and improving flow distribution, such that refrigerant is more evenly distributed in the plane of the entire plate of the cooling device 2.

Moreover, since it is refrigerant of both a gas phase and a liquid phase that flows out from the expansion valve outlet 12, in particular the refrigerant of both phases forming stratified flow, subsequent heat exchange of the refrigerant in the cooling device 2 is affected, reducing heat exchange efficiency. Hence, as shown in Figs. 3 and 4, the thermal management circuit according to the present disclosure has an injection part 33 at the inlet pipeline 311; the injection part 33 may comprise a blocking part 331 that extends in a cross section of the inlet pipeline 311 and an injection port 332 that is partitioned by the blocking part 331. In this case, the blocking part 331 is a portion that extends in the cross section of the inlet pipeline 311, scattering and mixing the refrigerant; therefore, a contracted opening that merely uniformly reduces the cross sectional area of the inlet pipeline 311 is different to the blocking part of the present disclosure. Thus, the blocking part 331 that extends in the cross section of the inlet pipeline 311 can scatter stratified flow, such that the refrigerant of both phases fully mixes, which helps to improve the heat exchange effect of the refrigerant in the cooling device 2.

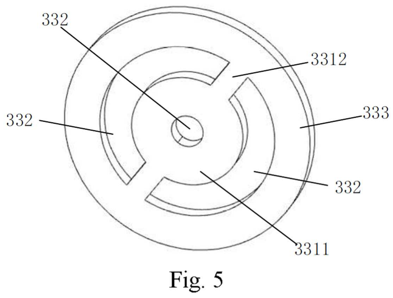

In particular, as shown in Fig. 5, the injection part 33 may further comprise an outer peripheral part 333, this outer peripheral part 333 being an outer peripheral edge part of the injection part 33; an inner contour of the outer peripheral part 333, for example, may be flush with an inner contour of the inlet pipeline 311. The blocking part 331 may comprise a central part 3311 that is connected to the outer peripheral part 333, and the central part, for example, may be directly connected to the outer peripheral part 333 or connected to the outer peripheral part 333 by means of an arm 3312. For example, this central part 3311 may be located at a central position in the cross section of the inlet pipeline 311, and connected to the outer peripheral part 333 of the injection part 33 by means of multiple arms 3312. The outer peripheral part 333, the central part 3311 and the multiple arms 3312 define multiple injection ports 332. For example, as shown in Fig. 5, the injection part 33 may comprise two arms 3312, and two arc-shaped injection ports 332 defined by the outer peripheral part 333, the central part 3311 and the two arms 3312. These two injection ports 332 may be respectively aligned with the first outlet pipeline 321 and the second outlet pipeline 322, and the overall injection part 33 may be a symmetrical structure, advantageous for scattered and mixed refrigerant flowing evenly into the first outlet pipeline 321 and the second outlet pipeline 322.

Furthermore, the centre of this central part 3311 may comprise an additional injection port 332; for example, this injection port 332 may be circular, and scattering of stratified flow can be further promoted by means of this added injection port 332, advantageous for mixing refrigerant of two phases.

Furthermore, as shown in Fig. 3, the inlet pipeline 311, the first outlet pipeline 321 and the second outlet pipeline 322 are distributed in a Y-shape, and in particular the first outlet pipeline 321 and the second outlet pipeline 322 are symmetrically arranged. Thus, better stream-splitting is further promoted, further reducing a pressure drop and improving flow distribution, such that refrigerant is more evenly distributed in the plane of the entire plate of the cooling device 2.

For example, the first outlet pipeline 321 and the second outlet pipeline 322 may be integrally formed. Specifically, as shown in Figs. 3 and 4, the connecting device 3 may comprise a first component 31 and a second component 32 that are fitted and fixed to each other. The inlet pipeline 311 may be arranged in the first component 31; the first component 31, for example, may comprise a fixing part 312 and a pipeline end part 313 that protrudes from the fixing part 312. The fixing part 312 is used for fixedly fitting to the second component 32, such as by means of a screw. The pipeline end part 313 of the first component 31 may extend into the accommodating hole of the second component, to realize fluid communication between the inlet pipeline 311 and the first outlet pipeline 321 and the second outlet pipeline 322. In particular, a sealing member 314 may be further provided at the pipeline end part 313, and this sealing member 314 may be used for fitting to a wall of the accommodating hole to achieve sealing, preventing leakage of refrigerant.

The injection part 33 may be fixed to the first component 31 or integrally formed with the first component 31, as long as the injection part 33 is arranged in the inlet pipeline 311. For example, as shown in Figs. 3 and 4, this injection part 33 is arranged near an interface of the first outlet pipeline 321 and the second outlet pipeline 322, in particular at a terminal end of the inlet pipeline 311, advantageous for mixed refrigerant more evenly flowing into both outlet pipelines.

The second component 32 further comprises an accommodating hole 323, and the accommodating hole 323, the first outlet pipeline 321 and the second outlet pipeline 322 may be integrally formed in the second component 32 and form a Y-shaped structure. The pipeline end part 313 of the first component 31 extends into the accommodating hole 323 to realize positioning, such that the inlet pipeline 311, the first outlet pipeline 321 and the second outlet pipeline 322 are distributed in a Y-shape. By means of the first outlet pipeline 321 and the second outlet pipeline 322 being integrally arranged inside the second component 32, the thermal management circuit can have improved sealing performance, and can bear greater pressure without being damaged, and more advantageously performs stream-splitting, reducing a pressure drop and improving flow distribution.

Furthermore, the present disclosure further proposes a vehicle (not shown), which may be, for example, a saloon, a sports car, an SUV, a bus, a truck, a trailer, a special-purpose vehicle, a motorcycle, etc. This vehicle may comprise a battery (not shown) and the thermal management circuit according to the present disclosure; in particular, the battery may act as a motive power source of the vehicle. The cooling device 2 of this thermal management circuit is fitted to this battery, to cool the battery body.

It should be understood that the above description has an explanatory rather than restrictive purpose. For example, the above embodiments (and/or aspects thereof) may be used in combination with each other. In addition, without departing from the scope of the present disclosure, multiple amendments may be performed to adapt specific situations or materials to the teachings of the present disclosure. The functions and performance of various elements or modules described herein are only provided for explanation and are by no means restrictive, being rather only exemplary embodiments. After reading the above description, many other embodiments and amendments within the spirit and scope of the claims would be obvious to a person skilled in the art. Therefore, the scope of the present disclosure should be determined with reference to the whole scope of the attached claims and equivalents as granted by the claims.

In the attached claims, the terms "comprise" and "wherein" are used as simple English equivalents of the corresponding terms "include" and "in which". In addition, in the following claims, the terms "first", "second" and "third", etc. only act as labels, and do not count as placing a numerical value requirement on the target thereof.

## Claims

1. Connecting device (3) that connects an expansion valve (1) and a cooling device (2), the connecting device comprising:
an inlet pipeline (311), in fluid connection with an expansion valve outlet (12),
a first outlet pipeline (321), comprising a first outlet end (3212) and a first inlet end (3211) connected to the inlet pipeline (311),
wherein an injection part (33) is provided in the inlet pipeline (311), the injection part (33) having a blocking part (331) that extends in a cross section of the inlet pipeline (311) and an injection port (332) that is partitioned by the blocking part (331).

2. Connecting device (3) according to Claim 1, wherein
the connecting device (3) further comprises a second outlet pipeline (322), the second outlet pipeline (322) comprising a second outlet end (3222) and a second inlet end (3221) connected to the inlet pipeline (311).

3. Connecting device (3) according to Claim 2, wherein
the inlet pipeline (311), the first outlet pipeline (321) and the second outlet pipeline (322) are distributed in a Y-shape.

4. Connecting device (3) according to Claim 3, wherein
the connecting device (3) comprises a first component (31) and a second component (32) that are fitted and fixed to each other,
the inlet pipeline (311) is arranged in the first component (31),
the first outlet pipeline (321) and the second outlet pipeline (322) are integrally formed in the second component (32), the second component (32) further comprising an accommodating hole (323), and one end of the first component (31) being inserted in the accommodating hole (323), so that the inlet pipeline (311), the first outlet pipeline (321) and the second outlet pipeline (322) are distributed in a Y-shape.

5. Connecting device (3) according to Claim 1, wherein
the injection part (33) further comprises an outer peripheral part (333) that is located at a radial outer side of the blocking part (331),
the blocking part (331) comprises a central part (3311) that is connected to the outer peripheral part (333).

6. Connecting device (3) according to Claim 5, wherein
the blocking part (331) further comprises an arm (3312), the central part (3311) being connected to the outer peripheral part (333) of the injection part (33) by means of the arm (3312), and the outer peripheral part (333), the central part (3311) and the arm (3312) defining multiple injection ports (332).

7. Connecting device (3) according to Claim 6, wherein
the injection part comprises two arms (3312), and two injection ports (332) that are defined by the outer peripheral part (333), the central part (3311) and the two arms (3312).

8. Connecting device (3) according to Claim 7, wherein
the injection part (33) is a symmetrical structure, and the two injection ports (332) are respectively aligned with the first outlet pipeline (321) and the second outlet pipeline (322).

9. Connecting device (3) according to Claim 7, wherein
the centre of the central part (3311) further comprises an injection port (332).

10. Connecting device (3) according to Claim 1, wherein
the injection part (33) is arranged near an interface of the first outlet pipeline (321) and the second outlet pipeline (322).

11. Thermal management circuit, comprising
an expansion valve (1), which comprises an expansion valve outlet (11),
a cooling device (2), which comprises a first cooling flow path (21),
and the connecting device (3) according to any one of Claims 1 to 10, wherein the inlet pipeline (311) of the connecting device (3) is in fluid connection with the expansion valve outlet (11), and a first outlet end (3212) of the first outlet pipeline (321) of the connecting device is connected to the first cooling flow path (21).

12. Thermal management circuit according to Claim 11, wherein
the connecting device (3) further comprises a second outlet pipeline (322), the second outlet pipeline (322) comprising a second outlet end (3222) and a second inlet end (3221) connected to the inlet pipeline,
wherein a second outlet end (3222) of the second outlet pipeline (322) of the connecting device (3) is connected to the second cooling flow path (22).

13. Thermal management circuit according to Claim 12, wherein
the cooling device (2) is a flat plate shape, and the first cooling flow path (21) and the second cooling flow path (22) respectively extend in a winding manner in a cooling plate and/or comprise multiple sub-flow paths.

14. Thermal management circuit according to Claim 11, wherein
the expansion valve (1) is configured to convey refrigerant of both a gas phase and a liquid phase out from the expansion valve outlet (11).

15. Vehicle, comprising
a battery,
and the thermal management circuit according to any one of Claims 11 - 14, the cooling device (2) of the thermal management circuit fitting to the battery to cool the battery.
